# EUROPÄISCHE PATENTSCHRIFT

(11) **EP 2 313 906 B1**
(45) Veröffentlichungstag und Bekanntmachung des Hinweises auf die Patenterteilung: **21.03.2012**
(21) Anmeldenummer: 09775595.3
(22) Anmeldetag: 13.08.2009
(51) Int. Cl.: H01J 7/18, B01J 20/04

(54) **VERFAHREN ZUR HERSTELLUNG EINER GETTEREINRICHTUNG**
METHOD FOR PRODUCING A GETTER DEVICE
PROCÉDÉ DE FABRICATION D'UN SYSTÈME DE GETTER

(30) Priorität: 18.08.2008 AT 12832008
(43) Veröffentlichungstag der Anmeldung: 27.04.2011
(73) Patentinhaber: Alvatec Alkali Vacuum Technologies GmbH, 9330 Althofen (AT)
(72) Erfinder: OGRIS, Erhard, 9313 St. Georgen am Längsee (AT)
(74) Vertreter: Wirnsberger, Gernot
(86) Internationale Anmeldenummer: PCT/AT2009/000311
(87) Internationale Veröffentlichungsnummer: WO 2010/019977

(56) Entgegenhaltungen:
- WO-A-2006/010179
- DE-A1- 3 530 058
- GB-A- 835 885

## Beschreibung

Die Erfindung betrifft ein Verfahren zur Herstellung einer Gettereinrichtung, wobei in einen Behälter ein Gettermaterial eingebracht und das Gettermaterial unter vermindertem Druck auf eine Temperatur erwärmt wird, sodass Gettermaterial an einer Innenseite des Behälters abgeschieden wird, wobei der Behälter während des Abscheidens von Gettermaterial in einer zone gekühlt wird.

Gettereinrichtungen werden beispielsweise in evakuierten Vorrichtungen eingesetzt, in welchen im Betrieb bzw. Gebrauch über lange Zeiträume ein Vakuum bestmöglich aufrechterhalten werden soll und daher gegebenenfalls eintretende Gase durch ein Gettermaterial dauerhaft gebunden werden müssen.

Ein Gettermaterial, das eine hohe spezifische Getterkapazität für ein bestimmtes Gas aufweist, z. B. Wasserstoff, kann in einem röhrchenförmigen Behälter aus Stahl ausgeliefert werden, wobei der Behälter zumindest an einem Ende mit einem bei niedrigen Temperaturen schmelzenden Metall oder einer dergleichen Legierung verschlossen ist und das Gettermaterial an einer Innenseite des Behälters schichtweise abgeschieden ist.

Beim Herstellen einer Gettereinrichtung der vorstehend genannten Art geht man bislang so vor, dass ein Gettermaterial als ganzes Stück oder Pulver in ein einseitig mit einem niedrig schmelzenden Metall oder einer dergleichen Legierung verschlossenes Röhrchen, z. B. wie erwähnt aus Stahl, eingebracht wird, wonach das Röhrchen unter vermindertem Druck, also einem Druck von weniger als 1 bar, vorzugsweise (Hoch-)Vakuum, am anderen Ende ebenfalls verschlossen wird, z. B. durch Verschweißen. Anschließend wird das eingeschlossene Gettermaterial erwärmt, sodass das Gettermaterial teilweise verdampft und sich an einer kühlen Stelle einer Innenseite des Röhrchens in Form von Schichten niederschlägt. Dadurch soll das Gettermaterial auf eine große Fläche verteilt werden, welche später zum Binden unerwünschter Gase zur Verfügung steht. Nach einem Einbau in einer Vorrichtung und Evakuieren der Vorrichtung wird die Gettereinrichtung zumindest im Bereich des einen Verschluss bildenden Metalls bzw. der entsprechenden Legierung erwärmt und dadurch geöffnet, sodass zu bindende Gase in das Innere der Gettereinrichtung eindringen und am schichtweise abgeschiedenen Gettermaterial gebunden werden können.

Das Dokument WO 2006/010179 A (siehe Zusammenfassung und Abbildung 3) offenbart ein Verfahren zur Herstellung einer Gettereinrichtung, wobei in einen Behälter 1 ein Gettermaterial 3 (z.B. Ba oder Li) eingebracht wird. Das Gettermaterial wird unter vermindertem Druck erwärmt und an einer Innenseite des Behälters abgeschieden. Der Behälter wird während eines Abscheidens in einer Zone AA gekühlt.

Bei der Vorgehensweise gemäß dem Stand der Technik hat es sich als nachteilig erwiesen, dass in das Röhrchen lediglich eine derart begrenzte Menge Gettermaterial eingebracht werden kann, dass beim Abscheiden von Gettermaterial die Innenseite eines Behälters gerade belegt wird. Wird zu viel Gettermaterial eingebracht, so bildet sich beim nachfolgenden Abscheiden desselben an einer kühlen Stelle des Röhrchens leicht ein Pfropfen bzw. wächst das Röhrchen zu, sodass letztlich eine für Einsatzzwecke gewünscht hohe Getterkapazität nicht erreicht wird.

Hier setzt die Erfindung an. Aufgabe der Erfindung ist es, ein Verfahren der eingangs genannten Art anzugeben, welches es bei kurzen Prozesszeiten erlaubt, eine Gettereinrichtung mit hoher Getterkapazität herzustellen.

Diese Aufgabe wird bei einem Verfahren der eingangs genannten Art dadurch gelöst, dass der Behälter während eines Abscheidens von Gettermaterial relativ zu der Zone bewegt wird, in welcher der Behälter gekühlt wird.

Die mit der Erfindung erzielten Vorteile sind insbesondere darin zu sehen, dass durch die vorgesehene Verfahrensführung eine Resublimationszone für verdampftes Gettermaterial kontrolliert verschoben wird, sodass letztlich große Teile einer Innenseite des Behälters mit viel Gettermaterial bedeckt werden können, ohne dass es zu einem Zuwachsen des Behälters kommt. Dadurch ist es möglich, in kurzer Zeit eine Gettereinrichtung bereitzustellen, die eine außerordentlich hohe Getterkapazität aufweist. Im Vergleich mit einem bislang angewendeten Verfahren lassen sich bei gleichen Dimensionen eines Behälters um zumindest 100 % mehr Gettermaterial im Behälter schichtweise abscheiden. Eine Getterkapazität einer erfindungsgemäß hergestellten Gettereinrichtung im Einsatz ist dementsprechend höher.

Im Rahmen der Erfindung ist es möglich, dass ein lediglich einseitig verschlossener Behälter eingesetzt wird und das Gettermaterial unter gleichzeitigem Evakuieren des Behälters abgeschieden wird. Bevorzugt ist es jedoch, dass der Behälter vor Erwärmen des Gettermaterials vakuumdicht verschlossen wird. In letzterem Fall lassen sich die Bedingungen für ein Abscheiden des Gettermaterials an einer Innenseite des Behälters besonders exakt steuern, weil im Inneren des Behälters konstante Bedingungen gegeben sind. Dabei wird der Behälter bevorzugt an zumindest einer Stelle mit einer bei einer Temperatur von 30 °C bis 550 °C schmelzenden Dichtung aus Metall oder einer Legierung verschlossen. Wird ein derart niedrig schmelzendes Metall oder eine dergleichen Legierung als Dichtung vorgesehen, gegebenenfalls zusammen mit einem Netz zum Halten des Metalls oder der Legierung, so lässt sich die erstellte Gettereinrichtung im Einsatz einfach aktivieren, indem die Gettereinrichtung bzw. zumindest deren aus Metall oder einer Legierung bestehender Verschluss auf eine Temperatur erwärmt wird, bei welcher das Metall bzw. die Legierung schmilzt oder zumindest so weich wird, dass sich die Dichtung öffnet. Das Metall bzw. die Legierung wird diesbezüglich so gewählt, dass ein Schmelzpunkt unterhalb einer Temperatur liegt, bei der abgeschiedenes Gettermaterial schmilzt oder verdampft. Nach Aktivierung kann zu absorbierendes Gas ohne Weiteres in die Gettereinrichtung eindringen und dort gebunden werden. Grundsätzlich kann der Behälter aber auch auf andere Art verschlossen sein, beispielsweise mit einem Schraubverschluss.

Um einerseits den Behälter gut kühlen zu können und andererseits beim Erwärmen das Gettermaterial auf einfache Weise gezielt in die Gasphase zu überführen, kann auch vorgesehen sein, dass der Behälter aus einem Metall oder einer Legierung besteht und das Gettermaterial durch eine Induktionsheizeinrichtung erwärmt wird.

Bevorzugt ist auch vorgesehen, dass in einem Abstand zur Induktionsheizeinrichtung eine Kühleinrichtung angeordnet wird, mit welcher der Behälter in der Zone gekühlt wird. Zwar ist grundsätzlich zwischen der Position der Induktionsheizeinrichtung und davon entfernten Bereichen des Behälters ein ausreichender Temperaturgradient vorhanden, sodass sich Gettermaterial aus der gebildeten Gasphase abscheidet, bevorzugt ist jedoch eine aktive Kühlung mit einer Kühleinrichtung, damit Gettermaterial gesteuert in bestimmten Bereichen der Innenseite des Behälters abgeschieden wird. Diesbezüglich erweist es sich insbesondere als vorteilhaft, dass als Kühleinrichtung eine den Behälter umgebende Düse eingesetzt wird, durch welche der Behälter in der Zone gekühlt wird, wobei durch die Düse ein Luftstrom in einem Winkel gerichtet auf den Behälter geführt wird, sodass abströmende Luft nicht zur Induktionsheizeinrichtung strömt. Durch das gerichtete Zuführen von kühlender Luft in einem entsprechenden Winkel von z. B. 30° bis 60° ist sichergestellt, dass die zugeführte Luft am eingesetzten Behälter abströmt und diesen dadurch kühlt, sich aber gleichzeitig von der Induktionsheizeinrichtung wegbewegt, sodass sich Heiz- und Kühleffekte nicht gegenseitig abschwächen oder gar kompensieren.

Wiewohl sich ein erfindungsgemäßes Verfahren auf Behälter beliebiger Art anwenden lässt, so ist doch bevorzugt, dass ein Rohr aus einem Stahl als Behälter eingesetzt wird, und zwar aus dem vorstehend genannten Grund einer guten Wärmeübertragung beim Kühlen und auch im Hinblick darauf, dass eine hergestellte Gettereinrichtung unter Umständen mehrere Monate gelagert werden muss, ehe diese zum Einsatz kommt, weshalb eine gute Haltbarkeit der Gettereinrichtung bei Umgebungsbedingungen gefordert sein kann.

Für eine einfache Verfahrensführung erweist es sich als zweckmäßig, ein gerades Rohr einzusetzen. Es kann jedoch auch vorgesehen sein, dass ein gekrümmtes Rohr eingesetzt wird.

Als Gettermaterial wird Material aus zumindest einem Alkali- oder Erdalkalimetall oder zumindest einer Legierung aus Alkali- und/oder Erdalkalimetallen eingesetzt. Es kann unter Umständen vorteilhaft sein, gleichzeitig Material aus mehreren Alkali- und/oder Erdalkalimetallen vorzusehen, die bei Erwärmen bei unterschiedlichen Temperaturen einen ausreichenden Dampfdruck für ein Abscheiden aufweisen. In diesem Fall ist es möglich, durch sequenzielles Abscheiden ein mehrschichtiges Gettermaterial abzuscheiden, das sich für ein Binden verschiedener Gase eignet, wobei eine später abgeschiedene Schicht auch nur einen Teil einer zuerst abgeschiedenen Schicht bedecken kann. Möglich ist es auch, im Behälter benachbarte bzw. hintereinanderliegende Schichten aus verschiedenen Gettermaterialien abzuscheiden.

Bevorzugt ist es im Rahmen der Erfindung vorgesehen, dass als Gettermaterial Barium eingesetzt wird, da in vielen Einsatzbereichen vor allem Wasserstoff, aber auch andere Gase gut gebunden werden sollen, wofür sich Barium besonders eignet, und sich das erfindungsgemäße Verfahren für eine Herstellung von Gettereinrichtungen mit Barium als besonders geeignet erwiesen hat.

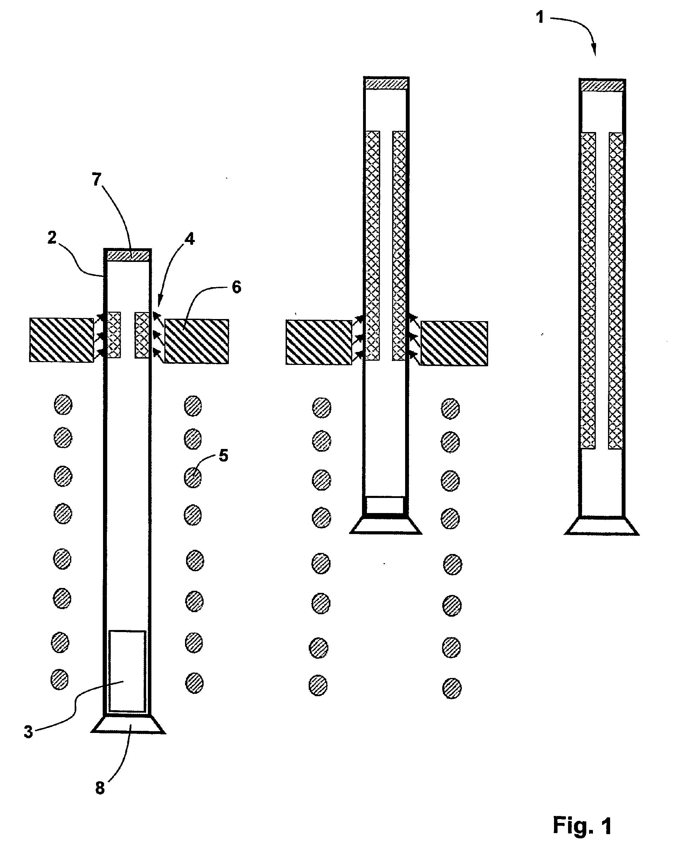

Weitere Merkmale, Vorteile und Wirkungen der Erfindung ergeben sich aus dem nachfolgend dargestellten Ausführungsbeispiel, anhand dessen die Erfindung noch näher erläutert ist. In der Zeichnung, auf die dabei Bezug genommen wird, zeigt Fig. 1 eine schematische Darstellung eines Ablaufs eines erfindungsgemäßen Verfahrens.

In Fig. 1 ist eine Herstellung einer Gettereinrichtung 1 schematisch dargestellt. Beim Herstellen der Gettereinrichtung 1 wird in einem ersten Schritt ein Behälter 2 bereitgestellt, der vorzugsweise aus einem runden, dünnwandigen Stahlrohr besteht. Das an sich leicht bearbeitete Stahlrohr wird an einem unteren Ende durch eine Dichtung 7 dicht verschlossen. Hierfür wird vorzugsweise eine Dichtung 7 aus einem bei einer Temperatur von 30 °C bis 550 °C schmelzenden Metall oder einer dergleichen Legierung eingesetzt, z. B. Indium, Gallium, Blei oder dergleichen. Dadurch kann die Gettereinrichtung 1 nach Einbau in einer evakuierten Vorrichtung durch kurzes Erwärmen bzw. Schmelzen der Dichtung 7 aktiviert werden, sodass der Behälter 2 an dieser Stelle offen ist und allenfalls in eine Vorrichtung eintretendes Gas durch ein im Behälter 2 befindliches Material aufgenommen bzw. gebunden werden kann. Im Anschluss wird ein festes Gettermaterial 3 in den Behälter 2 eingefüllt. Als Gettermaterial 3 kommt für viele Anwendungen ein Alkali- oder Erdalkalimetall, z. B. Barium, infrage. Ebenso ist es jedoch auch möglich, dass Legierungen solcher Metalle eingesetzt werden. Des Weiteren können auch Gettermaterialien eingesetzt werden, aus welchen sich bei Erwärmen ein gewünschtes aktives Gettermaterial abspaltet, z. B. Legierungen von Barium mit Aluminium und Nickel. Anschließend wird der Behälter 2 am anderen Ende 8 durch Widerstandsschweißen verschweißt, wiewohl auch andere Arten des Verschließens möglich sind. Der Behälter 2 ist dann vakuumdicht verschlossen.

Nach dem beidseitigen Verschließen des Behälters 2 wird dieser um 180° gedreht und, wie in Fig. 1 auf der linken Seite dargestellt, in eine Apparatur eingeführt, die eine Induktionsheizeinrichtung 5 sowie eine Kühleinrichtung 6 umfasst. Der Behälter 2 wird dabei in einer Startposition so angeordnet, dass die Kühleinrichtung 6 knapp unterhalb der Dichtung 7 liegt. Die Kühleinrichtung 6 umfasst vorzugsweise eine Ringdüse, durch welche Luft in einer in Fig. 1 durch Pfeile angedeuteten Richtung auf eine Oberfläche des Behälters 2 geblasen wird, sodass die Luft den Behälter 2 dort kühlt und zur Dichtung 7 strömt. Nach Aktivieren der Kühleinrichtung 6 wird die Induktionsheizeinrichtung 5 in Betrieb genommen und das Gettermaterial 3 erwärmt, sodass Gettermaterial 3 in die gasförmige Phase übergeht. Dabei ist es nicht unbedingt erforderlich, dass das feste Gettermaterial 3 bis zum Schmelzen erwärmt wird. Unter Umständen kann es schon ausreichend sein, dass das feste Gettermaterial 3 auf eine Temperatur erwärmt wird, bei welcher ein Dampfdruck über der festen Phase ausreichend hoch ist, um ein Abscheiden des Gettermaterials 3 an einer Innenseite des Behälters 2 zu ermöglichen. Das in die Gasphase übergetretene Gettermaterial 3 schlägt sich überwiegend im Bereich einer durch die Kühleinrichtung 6 gekühlten Zone 4 an einer Innenseite des Behälters 2 ab.

Nach Beginn des schichtförmigen Abscheidens von Gettermaterial 3 an der Innenseite des Behälters 2 wird der Behälter 2 relativ zur im Beispiel positionell fixierten Induktionsheizeinrichtung 5 bzw. Kühleinrichtung 6 bewegt, wobei das Gettermaterial 3 stetig durch die Induktionsheizeinrichtung 5 auf Temperatur gehalten wird, die gekühlte Zone 4 jedoch entlang einer Längsachse des Behälters 2 verschoben wird, sodass letztlich die Innenseite des Behälters 2 kontinuierlich mit durchgehenden Schichten aus Gettermaterial 3 versehen wird, wie es in Fig. 1 in der Mitte schematisch dargestellt ist. Eine Geschwindigkeit der Bewegung des Behälters 2 wird dabei so gewählt, dass die abgeschiedenen Schichten möglichst dick ausgebildet werden, ohne jedoch im Querschnitt ein Zuwachsen des Behälters 2 zu riskieren. Nach Abschluss dieses Schrittes weist die Gettereinrichtung 1, die beispielsweise in einem Solarreceiver eingesetzt wird, im Idealfall ein Gettermaterial 3 auf, das vollständig an der Innenseite des Behälters 2 in Form von dicken, mehrlagigen und dendritischen Schichten niedergeschlagen ist, die eine Porosität im Mikrometerbereich oder weniger aufweisen und deren Oberfläche nach Öffnen der Dichtung 7 für Gase daher vollständig zugänglich ist. Ein Aktivieren der so hergestellten Gettereinrichtung 1 findet meistens während eines Evakuierens der Vorrichtung statt, in welcher die Gettereinrichtung 1 eingebaut ist, da die Vorrichtung dabei gleichzeitig ausgeheizt wird, um adsorbierte Gase zu entfernen. Es ist hierbei üblich, die Vorrichtung auf Temperaturen bis zu 550 °C zu erwärmen.

Während es bislang nur möglich war, bei einem Stahlrohr mit 12 mm Durchmesser und 120 mm Länge maximal 3 g Barium einzusetzen, konnten beim erfindungsgemäßen Verfahren bei gleichen Dimensionen eines Stahlrohres 8 g bis 10 g Barium eingesetzt werden, ohne dass eine Pfropfenbildung beim Abscheiden von Barium beobachtet wurde. Dementsprechend konnte eine Getterkapazität um mehr als 100 % gesteigert werden.

## Patentansprüche

1. Verfahren zur Herstellung einer Gettereinrichtung (1), wobei in einen Behälter (2) ein Gettermaterial (3) eingebracht und das Gettermaterial (3) unter vermindertem Druck auf eine Temperatur erwärmt wird, sodass Gettermaterial (3) an einer Innenseite des Behälters (2) abgeschieden wird wobei der Behälter (2) während des Abscheidens von Gettermaterial (3) in einer Zone (4) gekühlt wird, **dadurch gekennzeichnet, dass** der Behälter (2) während des Abscheidens von Gettermaterial (3) relativ zu der Zone (4) bewegt wird, in welcher der Behälter (2) gekühlt wird.

2. Verfahren nach Anspruch 1, **dadurch gekennzeichnet, dass** der Behälter (2) vor Erwärmen des Gettermaterials (3) vakuumdicht verschlossen wird.

3. Verfahren nach Anspruch 2, **dadurch gekennzeichnet, dass** der Behälter (2) an zumindest einer Stelle mit einer bei einer Temperatur von 30 °C bis 550 °C schmelzenden Dichtung (7) aus Metall oder einer Legierung verschlossen wird.

4. Verfahren nach einem der Ansprüche 1 bis 3, **dadurch gekennzeichnet, dass** der Behälter (2) aus einem Metall oder einer Legierung besteht und das Gettermaterial (3) durch eine Induktionsheizeinrichtung (5) erwärmt wird.

5. Verfahren nach Anspruch 4, **dadurch gekennzeichnet, dass** in einem Abstand zur Induktionsheizeinrichtung (5) eine Kühleinrichtung (6) angeordnet wird, mit welcher der Behälter (2) in der Zone (4) gekühlt wird.

6. Verfahren nach Anspruch 5, **dadurch gekennzeichnet, dass** als Kühleinrichtung (6) eine den Behälter (2) umgebende Düse eingesetzt wird, durch welche der Behälter (2) in der Zone (4) gekühlt wird, wobei durch die Düse ein Luftstrom in einem Winkel gerichtet auf den Behälter (2) geführt wird, sodass abströmende Luft nicht zur Induktionsheizeinrichtung (5) strömt.

7. Verfahren nach einem der Ansprüche 1 bis 6, **dadurch gekennzeichnet, dass** ein Rohr aus einem Stahl als Behälter (2) eingesetzt wird.

8. Verfahren nach Anspruch 7, **dadurch gekennzeichnet, dass** ein gerades oder ein gekrümmtes Rohr eingesetzt wird.

9. Verfahren nach einem der Ansprüche 1 bis 8, **dadurch gekennzeichnet, dass** Gettermaterial (3) aus zumindest einem Alkali- oder Erdalkalimetall oder zumindest einer Legierung aus Alkali- und/oder Erdalkalimetallen eingesetzt wird.

10. Verfahren nach einem der Ansprüche 1 bis 9, **dadurch gekennzeichnet, dass** Gettermaterial (3) aus Barium eingesetzt wird.

## Claims

1. A method for producing a getter device (1), wherein getter material (3) is introduced into a container (2) and the getter material (3) is heated at a reduced pressure to a temperature such that the getter material (3) is deposited on an inside of the container (2), wherein the container (2) is cooled in a zone (4) during the deposition of getter material (3), **characterized in that** the container (2) is moved relative to the zone (4) in which the container (2) is cooled during the deposition of the getter material (3).

2. The method according to claim 1, **characterized in that** the container (2) is closed in a vacuum-tight manner prior to heating the getter material (3).

3. The method according to claim 2, **characterized in that** the container (2) is closed at least at one location with a seal (7) made of a metal or alloy that melts at a temperature of 30 °C to 550 °C.

4. The method according to any one of the claims 1 to 3, **characterized in that** the container (2) consists of a metal or an alloy and the getter material (3) is heated by means of an induction heating device (5).

5. The method according to claim 4, **characterized in that** at a distance from the induction heating device (5), a cooling device (6) is arranged by means of which the container (2) is cooled in the zone (4).

6. The method according to claim 5, **characterized in that** as a cooling device (6), a nozzle is used which surrounds the container (2) and by means of which the container (2) is cooled in the zone (4), wherein an air flow is fed through the nozzle at an angle directed to the container (2) such that outflowing air does not flow to the induction heating device (5).

7. The method according to any one of the claims 1 to 6, **characterized in that** a pipe made of steel is used as a container (2).

8. The method according to claim 7, **characterized in that** a straight or a curved pipe is used.

9. The method according to any one of the claims 1 to 8, **characterized in that** getter material (3) from at least one alkaline metal or alkaline earth metal or at least one alloy from alkaline metals and/or alkaline earth metals is used.

10. The method according to any one of the claims 1 to 9, **characterized in that** getter material (3) from barium is used.

## Revendications

1. Procédé pour fabriquer un dispositif de getter (1), un matériau de getter (3) étant introduit dans un réservoir (2) et le matériau de getter (3) étant réchauffé sous pression réduite à une température, de sorte que du matériau de getter (3) est déposé sur un côté intérieur du réservoir (2), le réservoir (2) étant refroidi pendant la dépose de matériau de getter (3) dans une zone (4), **caractérisé en ce que** le réservoir (2) est déplacé pendant la dépose de matériau de getter (3) par rapport à la zone (4) dans laquelle le réservoir (2) est refroidi.

2. Procédé selon la revendication 1, **caractérisé en ce que** le réservoir (2) est fermé de façon étanche au vide avant le réchauffement du matériau de getter (3).

3. Procédé selon la revendication 2, **caractérisé en ce que** le réservoir (2) est fermé en au moins un endroit avec un joint (7), fondant à une température de 30°C à 550°C, à base de métal ou d'un alliage.

4. Procédé selon l'une des revendications 1 à 3, **caractérisé en ce que** le réservoir (2) est à base d'un métal ou d'un alliage et le matériau de getter (3) est réchauffé par un dispositif de chauffage par induction (5).

5. Procédé selon la revendication 4, **caractérisé en ce qu'**un dispositif de refroidissement (6), avec lequel le réservoir (2) est refroidi dans la zone (4), est disposé à une distance du dispositif de chauffage par induction (5).

6. Procédé selon la revendication 5, **caractérisé en ce que**, comme dispositif de refroidissement (6), on utilise une buse entourant le réservoir (2) par laquelle le réservoir (2) est refroidi dans la zone (4), un flux d'air étant guidé par la buse sur le réservoir (2), orienté dans un angle, de sorte que l'air sortant de circule pas vers le dispositif de chauffage par induction (5).

7. Procédé selon l'une des revendications 1 à 6, **caractérisé en ce qu'**un tuyau à base d'un acier est utilisé comme réservoir (2).

8. Procédé selon la revendication 7, **caractérisé en ce qu'**un tuyau droit ou un tuyau incurvé est utilisé.

9. Procédé selon l'une des revendications 1 à 8, **caractérisé en ce qu'**on utilise du matériau de getter (3) à base d'au moins un métal alcalin ou un métal alcalinoterreux ou au moins un alliage de métaux alcalins et/ou de métaux alcalinoterreux.

10. Procédé selon l'une des revendications 1 à 9, **caractérisé en ce qu'**on utilise du matériau de getter (3) à base de baryum.
